(19) Europäisches Patentamt
European Patent Office
Office européen des brevets

(11) Publication number: **0 060 799**
**B1**

(12) # EUROPEAN PATENT SPECIFICATION

(45) Date of publication of patent specification: **06.06.84**

(51) Int. Cl.³: **C 08 K 5/36**

(21) Application number: **82630015.4**

(22) Date of filing: **26.02.82**

(54) **Diester antioxidants.**

(30) Priority: **13.03.81 US 243323**

(43) Date of publication of application:
**22.09.82 Bulletin 82/38**

(45) Publication of the grant of the patent:
**06.06.84 Bulletin 84/23**

(84) Designated Contracting States:
**BE DE FR GB IT NL**

(56) References cited:
**US - A - 4 108 831**

(73) Proprietor: **THE GOODYEAR TIRE & RUBBER COMPANY**
**1144 East Market Street**
**Akron, Ohio 44316 (US)**

(72) Inventor: **Cottman, Kirkwood Storer**
**1458 Black Pond Drive**
**Akron Ohio 44320 (US)**

(74) Representative: **Weyland, Joseph Jean Pierre**
**Goodyear International Tire Technical Center**
**Patent Department Avenue Gordon Smith**
**L-7750 Colmar-Berg (LU)**

EP 0 060 799 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

Technical Field

The present invention provides highly non-volatile antioxidants that can be used as stabilizers in oxidizable organic materials.

Background of the Invention

This invention relates to esters of hydroxy alkylthiophenols as antioxidants. U.S. Patent No. 3,553,163 reveals ring-substituted alkylthiophenolic antioxidants. U.S. Patent No. 3,565,857 reveals alkylthiosubstituted polynuclear phenolic antioxidants. Canadian Patent No. 1,293,131 reveals the preparation of ringsubstituted thiophenols. U.S. Patent No. 3,751,483 reveals the preparation of phenolic thioesters while U.S. Patent No. 4,108,831 reveals the use of hydroxyalkylthiophenols as antioxidants.

Those skilled in the art are constantly searching for less volatile and more persistent antioxidant systems for polymers subject to oxidative degradation, however, none of the patents referred to above, or other publications have disclosed or suggested the use of esters of hydroxy alkylthiophenols as antioxidants in oxidizable organic polymers.

Disclosure of the Invention

There is disclosed a polymer susceptible to oxidative degradation having incorporated therein a stabilizing amount of the compound having the following structural formula:

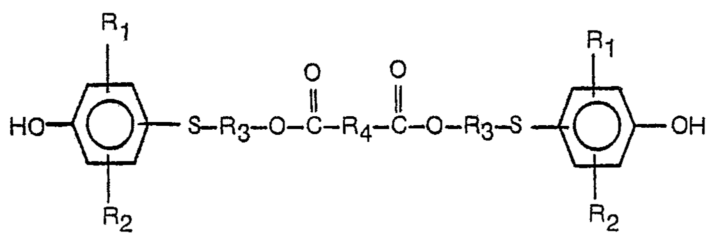

(I)

wherein $R_1$ and $R_2$ are selected from the group consisting of hydrogen, alkyl radicals of 1 to 4 carbon atoms and aralkyl radicals containing 7 to 9 carbon atoms;

$R_3$ is a divalent alkylene radical containing 2 to 8 carbon atoms or a radical of the structural formula:

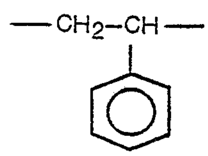

(II)

and $R_4$ is an alkylene radical containing 2 to 10 carbon atoms, a phenylene radical, or a radical of the structural formula:

$$-CH_2-CH_2-S-CH_2-CH_2-$$

The compounds of the present invention employed to stabilize organic polymers subject to oxidative degradation are prepared by reacting a compound of structural formula (III):

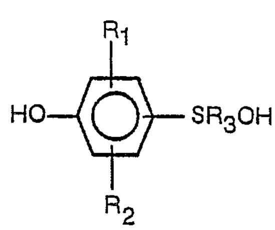

(III)

wherein $R_1$ and $R_2$ as defined above with a compound of structural formula (IV):

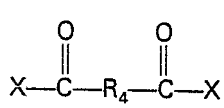

(IV)

wherein X is a chlorine or bromine radical or a radical of the structural formula —$OR_5$, wherein $R_5$ is a hydrogen radical or an alkyl radical of 1 to 3 carbon atoms, to form esters that may be represented by structural formula (I).

Preferably in structural formula (I), $R_1$ and $R_2$ are ortho to the phenolic hydroxyl group and the thio-group is para to the phenolic hydroxyl group.

The following compounds illustrate but are not intended to limit the compounds of structural formula (III).

2,6-ditertiary butyl-4-(2-hydroxyethylthio)phenol
2-hydroxyethylthiophenol
2,6-ditertiary butyl-4-(2-hydroxypropylthio)phenol
2,6-ditertiary butyl-4-(1-methyl-2-hydroxyethylthio)phenol
2,6-dimethyl-4-(3-hydroxyproplythio)phenol
2-tertiary butyl-4-methyl-6-(2-hydroxyethylthio)phenol
2-tertiary butyl-4-(2-hydroxypropylthio)phenol
2,6-ditertiary butyl-4-(8-hydroxyoctylthio)phenol
2-(alpha-phenylethyl)-4-(2-hydroxypropylthio)phenol
2,6-ditertiary butyl-4-(2-hydroxy-2-phenylethylthio)phenol
2,6-ditertiary butyl-4-(6-hydroxyhexylthio)phenol

The following compounds illustrate but are not intended to limit the compounds representative of structural formula (IV):

succinic acid
glutaric acid
adepic acid
sebacic acid
3,3'-thiodipropionic acid
terephthalic acid

The polymers that may be conveniently protected by the compounds of structural formula (I) are oxidizable vulcanized and unvulcanized polymers susceptible to oxygen degradation, such as natural rubber, balata, guttapercha and oxidizable synthetic polymers including those containing carbon-to-carbon double bonds, such as rubbery diene polymers, both conjugated and nonconjugated. Representative examples of the synthetic polymers used in the practice of this invention are polychloroprene; homopolymers of a conjugated 1,3-diene such as isoprene and butadiene, and in particular, polyisoprenes and polybutadienes having essentially all of their repeat units combined in a cis-1,4 structure; copolymers of a conjugated 1,3-diene such as isoprene and butadiene with up to 50 percent by weight of at least one copolymerizable monomer including ethylenically unsaturated monomers such as styrene and acrylonitrile; butyl rubber, which is a polymerization product of a major proportion of a mono-olefin and a minor proportion of a multi-olefin such as butadiene or isoprene; polyurethanes containing carbon-to-carbon double bonds; and polymers and copolymers of mono-olefins containing little or no unsaturation, such as polyethylene, polypropylene, ethylene propylene copolymers and terpolymers of ethylene, propylene and a conjugated diene such as dicyclopentadiene, 1,4-hexadiene, ethylidene norbornene and methylene norbornene.

Polyesters can also be stabilized with these compounds.

More Detailed Disclosure

The preparation of the compounds of the present invention is carried out by reacting compounds of structural formula (III) with those of structural formula (IV). When X is —$OR_5$ the reaction may be done neat, otherwise an inert solvent such as benzene, toluene or xylene may be used under acid conditions. Suitable acid catalysts are toluene solfonic acid, sulfuric acid and acidic resins. The temperature of the reaction may be up to the boiling point of the reactants or solvent. The by-product of the reaction which is a low boiling alcohol or water may be removed by an appropriate azeotropic solvent or under vacuum.

When X is a halogen in structural formula (IV), it is desirable to use a base such as triethylamine, sodium carbonate or pyridine to react with the hydrogen halide forming during the reaction.

None of the aforementioned process information is meant to be critical to the present invention, as the compounds will be effective as antioxidants regardless of their method of preparation.

Examples of compounds of this invention conforming to structural formula (I) are:

bis[2-(3,5-ditertiary butyl-4-hydroxyphenylthio)-1-methylethyl] adipate
bis[2-(3,5-ditertiary butyl-4-hydroxyphenylthio)-1-methylethyl] thiodipropionate
bis[2-(3,5-ditertiary butyl-4-hydroxyphenylthio)-1-methylethyl] sebacate

The following examples are intended to illustrate but not to limit the scope of the present invention:

Example 1

To a 3-neck flask equipped with agitator, thermometer and condenser was charged 55 g of 1-(3,5-ditertiary butyl-4-hydroxyphenylthio)-2-hydroxypropane, 3/4 g toluenesulfonic acid, 100 ml

toluene and 17.1 g sebacic acid. The mixture was refluxed and the water collected in a water trap. The reaction was followed by gas chromatography until the phenolic has all reacted. The product was washed with water and then the volatiles were stripped off. Weight 64 g The product was bis[2-(3,5-ditertiary butyl-4-hydroxyphenylthio)-1-methylethyl] sebacate. Yield 64 g.

Example II

To the reaction vessel of Example I was charged 63 g of 1-(3,5-ditertiary butyl-4-hydroxyphenylthio)-2-hydroxypropane, 2 drops of toluenesulfonic acid and 14.8 g adipic acid were heated at 145°C for one hour. The volatiles were then stripped off at pot 125°C at 2b,bmbar (20 mm Hg). The product was characterized as bis[2-(3,5-ditertiary butyl-4-hydroxyphenylthio)-1-methylethyl] adipate.

Example III

To the reaction vessel of Example I was charged 54 g 1-(3,5-ditertiary butyl-4-hydroxyphenylthio)-2-hydroxypropane, 15 g 3,3'-thiodipropionic acid, 1/2 g toluenesulfonic acid, 150 ml xylene and heated to reflux. The water formed during the reaction was azeotroped off. After reacting for 3 hours, gas chromatographic analysis indicated the phenolic had all reacted. The volatiles were stripped off. The product was bis[2-(3,5-ditertiary-butyl-4-hydroxyphenylthio)-1-methylethyl] thiodipropionate.

Test Data

To test the effectiveness of the compounds of the present invention, the compounds prepared in Examples I, II and III and two other compounds and a control were evaluated in an oxygen absorption test in SBR 1006 at 100°C using 1 part per hundred stabilizer by weight of rubber. The results are found in Table I. Also included in Table I is data wherein the compounds were evaluated in polypropylene at 140°C at 0.1 part per hundred by weight of polypropylene.

| Compound From | Hours to Absorb 1.0% $O_2$ | Days to Failure at 140°C in Polypropylene |
|---|---|---|
| 1) Example I | 302 | 12 |
| 2) Example II | 256 | 11 |
| 3) Example III | 334 | 22 |
| 4) 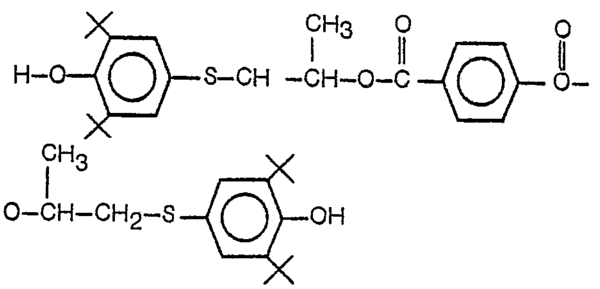 | 289 | 16 |
| 5) 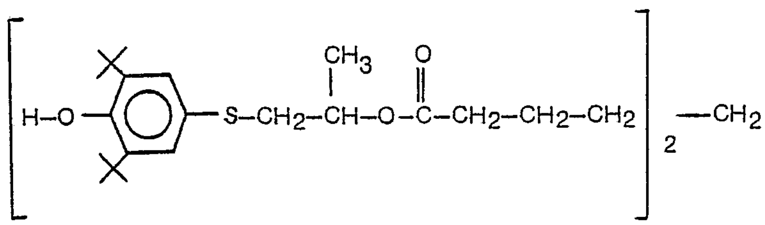 | 264 | 11 |
| 6) Control — Wing Stay L* | 329 | N/A |
| 7) No Stabilizer | 20 | 2 |

*Trade Name of The Goodyear Tire & Rubber Company for the butylated reaction product of para-cresol and dicyclopentadiene.

Industrial Applicability

The compounds of the present invention are obviously utilizable as stabilizers for organic polymers subject to oxidative degradation.

While certain representative embodiments and details have been shown for the purpose of illustrating the invention it will be apparent to those skilled in this art that various changes and modifications may be made therein without departing from the spirit or scope of the invention.

**Claims**

1. A polymer susceptible to oxidative degration having incorporated therein a stabilizing amount of compound having the following structural formula:

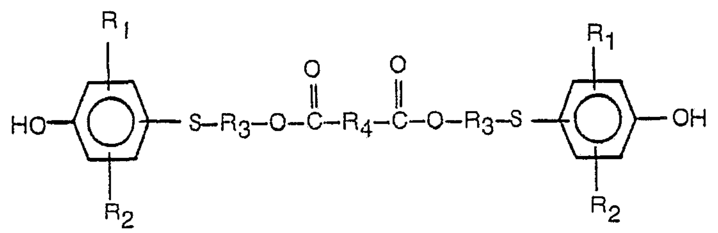

(I)

wherein $R_1$ and $R_2$ are selected from the group consisting of hydrogen, alkyl radicals of 1 to 4 carbon atoms and aralkyl radicals containing 7 to 9 carbon atoms; $R_3$ is a divalent alkylene radical containing 2 to 8 carbon atoms or a radical of the structural formula:

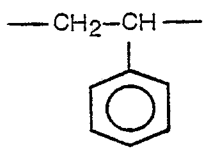

(II)

and $R_4$ is an alkylene radical containing 2 to 10 carbon atoms, a phenylene radical, or a radical of the structural formula:

$$-CH_2-CH_2-S-CH_2-CH_2-$$

2. The polymer according to claim 1 wherein $R_1$ and $R_2$ are selected from the group consisting of hydrogen and tertiary butyl and are located in the positions ortho to the phenolic hydroxyl group.

**Patentansprüche**

1. Polymeres, das gegenüber einem oxidativen Abbau anfällig ist und eine stabilisierende Menge einer Verbindung der folgenden Strukturformel

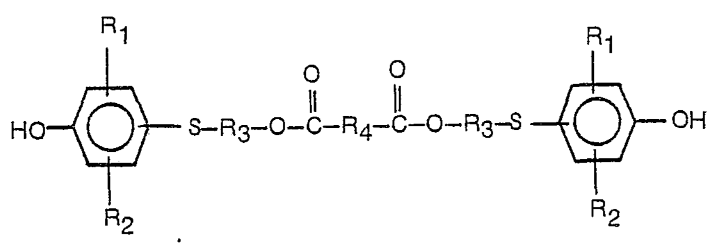

(I)

enthält, worin $R_1$ and $R_2$ aus der Gruppe ausgewählt werden, die aus Wasserstoff, Alkylresten mit 1 bis 4 Kohlenstoffatomen sowie Aralkylresten, die 7 bis 9 Kohlenstoffatome enthalten, besteht, $R_3$ ein divalenter Alkylenrest, der 2 bis 8 Kohlenstoffatome enthält oder ein Rest der Strukturformel

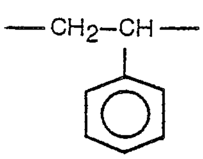

(II)

ist und $R_4$ ein Alkylenrest ist, der 2 bis 10 Kohlenstoffatome enthält, vorzugsweise ein Phenylenrest oder ein Rest der Strukturformel

$$—CH_2—CH_2—S—CH_2—CH_2—$$

2. Polymeres nach Anspruch 1, dadurch gekennzeichnet, daß $R_1$ und $R_2$ aus der Gruppe ausgewählt werden, die aus Wasserstoff und tertiärem Butyl besteht, und in den o-Stellungen bezüglich der phenolischen Hydroxylgruppe sitzen.

**Revendications**

1. Polymère susceptible de subir une dégradation par oxydation et dans lequel on incorpore une quantité stabilisante d'un composé répondant à la formule structurale:

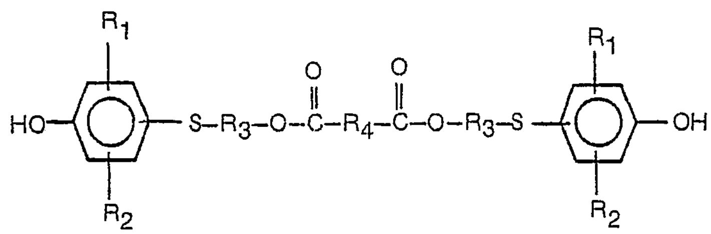

(I)

dans laquelle $R_1$ et $R_2$ sont choisis parmi le groupe comprenant l'atome d'hydrogène, les groupes alkyle contenant 1 à 4 atomes de carbone et les groupes aralkyle contenant 7 à 9 atomes de carbone; $R_3$ représente un groupe alkylène bivalent contenant 2 à 8 atomes de carbone ou un radical de formule structurale:

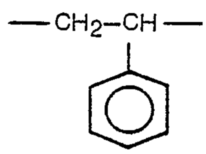

(II).

et $R_4$ représente un groupe alkylène contenant 2 à 10 atomes de carbone, un groupe phénylène ou un radical de formule structurale:

$$—CH_2—CH_2—S—CH_2—CH_2—$$

2. Polymère suivant la revendication 1, caractérisé en ce que $R_1$ et $R_2$ sont choisis parmi le groupe comprenant l'atome d'hydrogène et le groupe tert-butyle, tandis qu'ils occupent les positions ortho vis-à-vis du groupe hydroxyphénolique.